# FASCICULE DE BREVET EUROPEEN

(11) **EP 2 904 653 B1**
(45) Date de publication et mention de la délivrance du brevet: **27.02.2019**
(21) Numéro de dépôt: 13782780.4
(22) Date de dépôt: 02.10.2013
(51) Int. Cl.: H01M 2/10, H01M 2/20, H01M 10/48, H01R 11/11

(54) **DISPOSITIF POUR LE MONTAGE RAPIDE DE CONNEXIONS ELECTRIQUES, NOTAMMENT SUR UNE BATTERIE DE TRACTION**
ELEKTRISCHE VERBINDUNGSEINRICHTUNG FÜR EINE TRAKTIONSBATTERIE
ELECTRICAL CONNECTION DEVICE FOR A TRACTION BATTERY.

(30) Priorité: 02.10.2012 FR 1259333
(43) Date de publication de la demande: 12.08.2015
(73) Titulaire: Renault S.A.S., 92100 Boulogne-Billancourt (FR)
(72) Inventeur: LEROUX, Thierry, 76000 Rouen (FR); SUIGNARD, Yannick, 76520 Les Authieux Sur Le Port Saint Ouen (FR); DEROUALLE, Pascal, 27370 La Saussaye (FR)
(86) Numéro de dépôt international: PCT/FR2013/052343
(87) Numéro de publication internationale: WO 2014/053771

(56) Documents cités:
- WO-A1-2011/012215
- WO-A1-2011/027917
- US-A- 6 152 776
- US-A1- 2007 188 147
- US-A1- 2008 123 261
- US-A1- 2011 236 742
- US-B1- 6 346 011

## Description

La présente invention concerne le domaine de la connectique. Elle s'applique notamment, mais pas exclusivement, aux batteries de traction des véhicules électriques (« EV » d'après la terminologie anglo-saxonne « Electric Vehicle ») ou hybrides ((« HEV » d'après la terminologie anglo-saxonne « Hybrid Electric Vehicle »).

Dans le contexte actuel de consensus autour du réchauffement climatique, la diminution des émissions de dioxyde de carbone (CO₂) est un défi majeur auquel sont confrontés les constructeurs automobiles, les normes étant toujours plus exigeantes en la matière.

Outre l'amélioration constante des rendements des moteurs thermiques classiques, qui s'accompagne d'une baisse des émissions de CO₂, les EV et les HEV sont aujourd'hui considérés comme la solution la plus prometteuse pour diminuer les émissions de CO₂.

Différentes technologies de stockage de l'énergie électrique ont été testées dans les dernières années afin de maximiser l'autonomie des EV, qui nécessitent d'être branchés régulièrement à un chargeur afin de recharger leur batterie de traction. Il apparaît aujourd'hui que les batteries lithium-ion (Li-ion) sont celles qui permettent d'obtenir le meilleur compromis entre la densité de puissance, qui favorise les performances en termes d'accélération notamment, et la densité d'énergie, qui favorise l'autonomie. Cependant, l'utilisation de cette technologie Li-ion pour constituer des batteries de traction pour EV n'est pas sans poser de nombreuses difficultés, notamment si l'on considère les niveaux de tension nécessaires, de l'ordre de 400 volts (V). La présente invention se propose de surmonter ces difficultés.

En effet, une unité élémentaire de stockage de l'énergie électrique, communément appelée « cellule Li-ion » ou « cellule électrochimique » ou encore tout simplement « cellule », ne délivre qu'une tension de l'ordre de 3 à 4 V. Plusieurs cellules doivent donc être connectées en série et/ou en parallèle, pour former des « modules » aux bornes desquels est délivrée un tension de l'ordre de 50 V. La connexion des cellules pour former un module est effectuée par soudure. Puis, plusieurs modules doivent être connectés en série et/ou en parallèle, afin de former une batterie aux bornes de laquelle est délivrée une tension de l'ordre de 400 V. La connexion des modules pour former une batterie est assurée par des éléments de connexion supportant des hautes tensions, ces éléments étant communément appelés « bus-bars » selon la terminologie anglo-saxonne. Mais un assemblage électrique aussi complexe impliquant des hautes tensions doit être réalisé en respectant des normes sécuritaires drastiques, qu'il s'agisse de la surface minimum des contacts, de la pression devant être exercée sur les éléments mis en contact ou encore des équipements de protection dont doivent être munis les opérateurs d'assemblage pour établir ces contacts, notamment des gants épais en caoutchouc isolant.

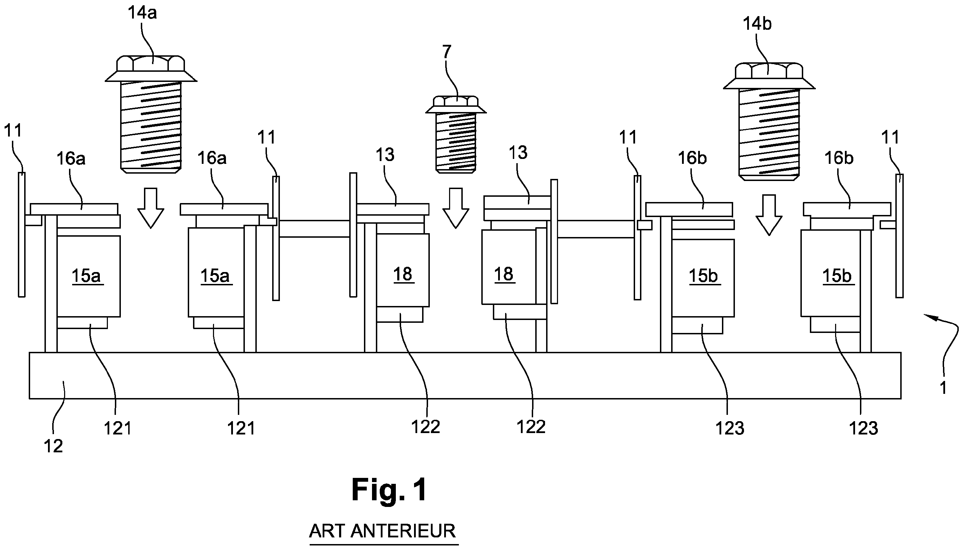

Il est connu de l'état de la technique, notamment du brevet US 6,152,776, de connecter des modules entre eux en utilisant une plaque de connexion, communément appelée « bar-plug » selon la terminologie anglo-saxonne, comportant un cadre moulé en résine auquel est fixé au moins un bus-bar, ainsi qu'au moins un élément terminal de détection de tension ou « voltage-detection terminal unit » selon la terminologie anglo-saxonne utilisée dans le brevet. Un inconvénient de cette solution, qui est décrite plus en détail par la suite en regard de la figure1, est d'une part la grande quantité de vis nécessaires pour l'assemblage d'une plaque de connexion, qui rend l'assemblage long et fastidieux. D'autre part, la taille réduite des vis ou des écrous, notamment celles ou ceux utilisés pour connecter les éléments terminaux de détection de tension, rend très difficile leur manipulation avec des gants en caoutchouc isolant. Ainsi, les risques de défaut de vissage, notamment de serrage, et donc les risques de défaut de contact sont très importants. C'est inacceptable compte-tenu des vibrations auxquelles est soumise une batterie de traction et compte-tenu des niveaux de tension mis en jeu. Il s'agit là encore d'un problème que la présente invention se propose de résoudre.

L'invention a notamment pour but de simplifier l'assemblage des batteries Li-ion, ceci dans le respect des normes sécuritaires applicables à la haute tension. A cet effet, l'invention a pour objet un dispositif de connexion électrique pour relier un fil conducteur à un conducteur massique comportant un orifice taraudé. Le dispositif comporte une cosse à laquelle est relié le fil, la cosse comportant au moins deux éléments d'accroche et étant apte à passer alternativement d'une configuration libre à une configuration d'accroche dans le taraudage de l'orifice. Le dispositif comporte également un élément d'appui apte à être fixé solidairement au conducteur massique, de telle sorte qu'il exerce simultanément une force d'appui sur la cosse, ladite force d'appui maintenant la cosse dans sa configuration d'accroche.

Avantageusement, la cosse peut comporter un corps principal initialement plié suivant un axe de manière à délimiter deux corps secondaires, chacun des deux corps secondaires pouvant comporter une griffe disposée de telle sorte que, lorsque l'élément d'appui exerce la force d'appui sur la cosse, celle-ci soit finalement maintenue dépliée à plat au contact électrique avec l'élément massique, les griffes accrochées dans le taraudage de l'orifice.

Par exemple, l'orifice peut être l'orifice taraudé d'un écrou. Par exemple, l'élément d'appui peut être moulé en résine. Par exemple, le conducteur massique peut être un connecteur d'une cellule électrochimique d'une batterie, ledit connecteur pouvant comporter au moins une borne à laquelle est assemblée l'écrou, le fil pouvant véhiculer un courant de mesure du potentiel à ladite borne.

Avantageusement, l'élément d'appui peut être un cadre d'une plaque de connexion assemblée au connecteur par l'intermédiaire d'au moins une vis, ladite vis pouvant établir une connexion pour prélever un courant de puissance à la batterie, l'opération de vissage de ladite vis pouvant exercer progressivement la force d'appui.

L'invention a également pour objet une batterie de traction pour véhicule électrique ou hybride comportant un dispositif de connexion selon l'un des modes de réalisation précédemment énoncés, ainsi qu'un véhicule électrique ou hybride comportant une telle batterie.

La présente invention a encore pour principal avantage de fournir une connexion robuste et fiable. Elle réduit les temps d'assemblage, notamment en permettant un montage et un démontage partiellement manuel, c'est-à-dire en ayant moins recours à des outils, tout en diminuant les risques de défaut d'assemblage.

D'autres caractéristiques et avantages de l'invention apparaîtront à l'aide de la description qui suit faite en regard de dessins annexés qui représentent :
- la figure 1, par une vue en coupe transversale, une plaque de connexion selon l'art antérieur;
- les figures 2a, 2b, 3a, 3b, 3c, 3d et 4, par différentes vues, un exemple de réalisation de l'invention.

La figure 1 illustre, par une vue en coupe transversale, une plaque de connexion 1 selon l'art antérieur, couramment appelée « bar-plug » selon une terminologie anglo-saxonne, comportant un cadre moulé 11 en résine, auquel sont associés des bus-bars 16a et 16b. Une vis 17 est vissée dans un écrou 18 afin d'établir un contact électrique entre une cosse 13 et une borne 122 d'une cellule 12, la cosse 13 jouant le rôle d'élément terminal de détection de tension. La cosse 13 est par ailleurs reliée à un câble véhiculant un courant de mesure, ce câble n'étant pas représenté sur la figure. Des vis 14a et 14b sont vissées dans des écrous 15a et 15b respectivement, afin d'établir un contact électrique entre des bornes 121 et 123 de la cellule 12 et les bus-bars 16a et 16b respectivement. Les bus-bars 16a et 16b relient la cellule 12 à d'autres cellules pour véhiculer le courant de puissance, ces autres celules n'étant pas représentés sur la figure. Comme illustré sur la figure, les dimensions des vis 14a et 14b, qui assurent la tenue d'un contact pour un courant de puissance, sont plus importantes que les dimensions de la vis 17, qui assure la tenue d'un contact pour un courant de mesure.

Même si cette vue en coupe transversale ne fait apparaître qu'un dispositif de connexion à 3 vis et 3 écrous, il faut bien comprendre que ce dispositif de connexion se répète à distance régulière suivant l'axe longitudinal de la plaque de connexion 1 (i.e. orthogonalement au plan de la figure), ceci afin d'assurer un contact conforme aux normes sécuritaires tout le long de la plaque connexion 1. Typiquement, ce mécanisme se répète 16 fois selon l'axe longitudinal de la plaque de connexion 1. Ce qui correspond, pour une seule plaque du type la plaque de connexion 1, à 32 vis du type des vis 14a et 14b, et 16 vis du type de la vis 17, soit 48 vis. De plus, pour assembler une batterie de traction 400 V complète, il faut compter typiquement 3 plaques de connexion du type de la plaque 1, soit 144 vis en tout dont 48 petites vis du type de la vis 17 très difficiles à manipuler avec des gants isolants. Il apparaît clairement, à la lumière de la figure 1 que, comme explicité précédemment, la quantité et la taille des vis nécessaires pour l'assemblage d'une batterie rendent le processus d'assemblage long et fastidieux, et qu'il mène à un résultat peu fiable dans un environnement vibratoire comme une automobile.

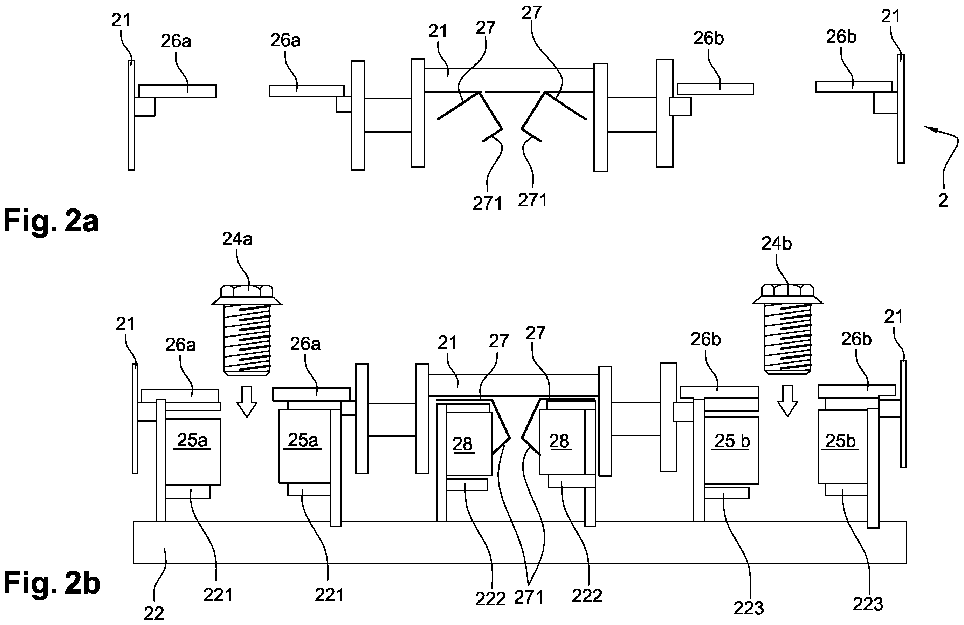

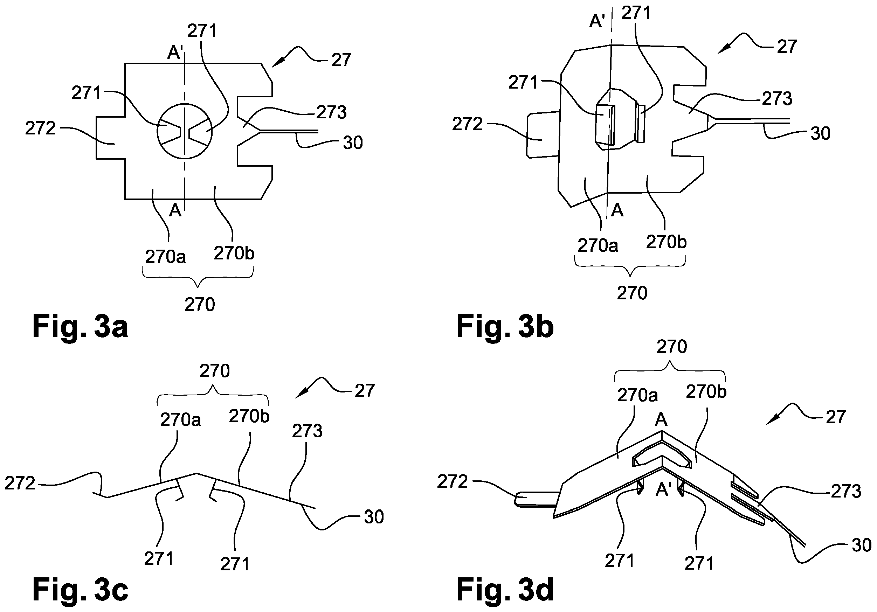

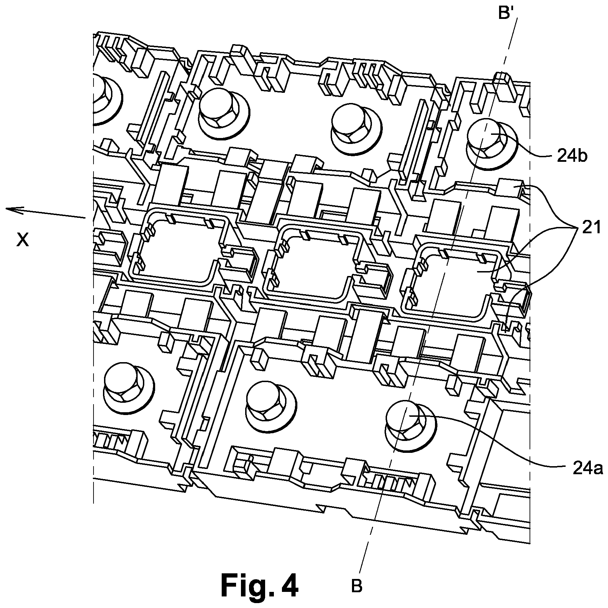

Les figures 2a et 2b illustrent, par des vues en coupe dans un plan passant par un axe transversal BB' illustré sur la figure 4, avant assemblage et après assemblage respectivement, un exemple de réalisation de l'invention. Une plaque de connexion 2 comporte un cadre moulé 21 en résine, auquel sont associés des bus-bar 26a et 26b. Une cosse à agrafes 27 comportant deux griffes 271, cette cosse étant décrite en détail par la suite en regard des figures 3a à 3d, est maintenue sous pression entre le cadre 21 et une cellule 22 comportant un connecteur formé par trois bornes 221, 222 et 223, de telle sorte que ses griffes 271 s'agrippent dans les filets de taraudage d'un écrou 28, afin d'établir un contact électrique avec la borne 222 de la cellule 22. La cosse à agrafes 27 joue le rôle d'élément terminal de détection de tension, cette cosse à agrafes 27 étant par ailleurs reliée à un câble 30 véhiculant un courant de mesure, ce câble 30 étant représenté sur les figures 3a à 3d. Des vis 24a et 24b sont vissées dans des écrous 25a et 25b respectivement, afin d'établir un contact électrique entre les bornes 221 et 223 de la cellule 22 et les bus-bars 26a et 26b respectivement. Les bus-bars 26a et 26b sont par ailleurs reliés à d'autres cellules pour véhiculer un courant de puissance, ces cellules n'étant pas représentées sur la figure.

Les figures 3a, 3b, 3c et 3d illustrent l'exemple de cosse à agrafes 27 selon l'invention par une vue de dessus, par une première vue en perspective, par une vue de profil et par une deuxième vue en perspective respectivement. La cosse à agrafes 27 comporte un corps principal métallique plat 270 comportant une ouverture dans sa partie sensiblement centrale. Cette ouverture, qui peut être obtenue par découpe du corps 270, présente la forme générale d'un disque, sauf en deux zones disposées symétriquement où elle forme les deux griffes 271. Le corps principal 270 est par ailleurs plié suivant un axe central AA', de telle sorte que le pli formé sépare le corps principal 270 en deux corps secondaires 270a et 270b sensiblement symétriques et accueillant chacun une des griffes 271. Dans le présent exemple de réalisation, les plans respectifs des deux corps secondaires 270a et 270b peuvent former un angle de l'ordre de 45°. Les griffes 271 sont elles aussi pliées par rapport à leur corps secondaire d'accueil, avec lequel elles forment chacune un angle de l'ordre de 90°. Le corps secondaire 270a comporte une saillie 272 le long de l'un de ses bords, la saillie 272 ayant essentiellement la fonction de centreur par rapport à l'ecrou 28. Le corps secondaire 270b comporte quand à lui une borne 273 le long de son bord opposé à la saillie 272, le câble 30 véhiculant un courant de mesure étant soudé à la borne 273.

La figure 4 illustre, par une vue en perspective, l'exemple de plaque de connexion 2 selon l'invention, ainsi que l'axe transversal BB' par lequel passe le plan de coupe des figures 2a et 2b. Sous cet angle de vue, seuls le cadre 21 et les vis 24a et 24b sont visibles, les autres éléments, notamment la cosse à agrafe 27 et la borne 222, étant masqués car disposés sous le cadre 21. Cette figure montre notamment que le dispositif selon l'invention décrit précédemment se répète à distance régulière suivant l'axe longitudinal X de la plaque de connexion 2, ceci afin d'assurer un contact conforme aux normes sécuritaires tout le long de la plaque 2. Cette figure illustre aussi une caractéristique importante de l'invention en rapport avec le cadre 21, qui est moulé en résine de telle sorte qu'il couvre complètement la cosse à agrafe 27 pour la maintenir en compression.

Ainsi, la cellule 22 étant disposé horizontalement avec ses bornes 221, 222 et 223 d'étendant de bas en haut, l'operateur applique avec le pouce un effort pour pré-agrafer la cosse 27 dans l'écrou 28 ainsi que sur toutes les autres bornes du même type que la borne 222 suivant l'axe X. Pour cela, il présente les griffes 271 de la cosse à agrafe 27 en regard du trou taraudé de l'écrou 28, de sorte que la cosse à agrafe soit bien positionnée sur l'écrou 28 de manière quasiment stable par ses griffes 271. Puis, il dépose le cadre 21 sur l'ensemble ainsi formé, en présentant les trous prévus dans le cadre 21 pour les vis 24a et 24b en regard des trous taraudés des écrous 25a et 25b respectivement. Puis, il introduit les vis 24a et 24b dans les trous prévus à cet effet dans le cadre 21 et les visse dans les écrous 25a et 25b en respectant le couple de serrage sécuritaire. Il fait de même sur toutes les autres bornes du même type que les bornes 221 t 223 suivant l'axe X. Durant le serrage, la partie du cadre 21 couvrant la cosse à agrafe 27 exerce une force d'appui verticale de haut en bas sur le corps principal 270 de cette cosse au niveau de son pli central AA', de telle sorte que l'angle entre ses deux corps secondaires 270a et 270b diminue depuis sensiblement 45° jusqu'à sensiblement 0°. Simultanément, les deux griffes 271, déjà disposées dans le trou de taraudage de l'écrou 28, s'écartent progressivement pour s'introduire dans des filets dudit taraudage. Une fois les vis 24a et 24b amenées en bout de course et serrées au couple sécuritaire requis, le corps principal 270 de la cosse 27 présente alors une forme sensiblement plane, ses deux corps secondaires 270a et 270b étant dans un même plan comme illustré par la figure 2b. Les griffes 271 sont quand à elle solidement agrippées au taraudage de l'écrou 28. Il n'échappera pas à l'homme du métier l'importance de mouler la partie du cadre 21 qui couvre la cosse à agrafe 27 de manière à la rendre très rigide, c'est-à-dire qu'elle soit difficilement déformable, de sorte que la force de serrage des écrous 24a et 24b soit transmise de manière efficace à la cosse à agrafe 27 et qu'elle s'aplatisse sensiblement complètement pour établir un contact sécuritaire avec la borne 222.

L'invention décrite précédemment a encore pour principal avantage qu'elle permet, sur une chaîne d'assemblage de batteries, d'assouplir considérablement les mesures de surveillance du processus d'assemblage ainsi que les mesures de validation des batteries assemblées.

## Revendications

1. Dispositif de connexion électrique (2) pour relier un fil conducteur (30) à un connecteur d'une cellule électrochimique (22) d'une batterie, le connecteur comportant un orifice taraudé d'un écrou (28), le dispositif comportant :
- une cosse (27) apte à être reliée au fil, la cosse comportant un corps principal (270) apte à être plié suivant un axe (AA') de manière à délimiter deux corps secondaires (270a, 270b), chacun des deux corps secondaires comportant une griffe (271), la cosse étant apte à passer d'une configuration libre à une configuration d'accroche dans le taraudage de l'orifice ;
- un élément (21) d'appui sur la cosse, apte à être fixé au connecteur par l'intermédiaire d'au moins une vis (24a, 24b), de sorte que ladite vis établisse une connexion pour prélever un courant à la batterie et exerce la force d'appui sur la cosse, ladite force d'appui maintenant la cosse dans sa configuration d'accroche, dépliée à plat au contact électrique avec le connecteur, les griffes accrochées dans le taraudage de l'orifice.

2. Dispositif selon la revendication précédente, l'élément d'appui étant moulé en résine.

3. Dispositif selon la revendication 2, ledit connecteur comportant au moins une borne (222) à laquelle est assemblée l'écrou (28), le fil (30) véhiculant un courant de mesure du potentiel à ladite borne.

4. Dispositif selon la revendication 3, l'élément d'appui étant un cadre (21) d'une plaque de connexion (2) assemblée au connecteur, ladite vis établissant une connexion pour prélever un courant de puissance à la batterie.

5. Batterie de traction pour véhicule électrique ou hybride, **caractérisée en ce qu'**elle comporte un dispositif de connexion selon l'une des revendications 3 ou 4.

6. Véhicule électrique ou hybride, **caractérisé en ce qu'**il comporte une batterie selon la revendication 5.

## Patentansprüche

1. Elektrische Verbindungsvorrichtung (2), um einen leitfähigen Draht (30) mit einem Verbinder einer elektrochemischen Zelle (22) einer Batterie zu verbinden, wobei der Verbinder eine Gewindeöffnung einer Mutter (28) umfasst, wobei die Vorrichtung umfasst:
- eine Klemme (27), die geeignet ist, mit dem Draht verbunden zu werden, wobei die Klemme einen Hauptkörper (270) umfasst, der geeignet ist, entlang einer Achse (AA') gefalzt zu werden, um zwei Hilfskörper (270a, 270b) zu begrenzen, wobei jeder der zwei Hilfskörper einen Greifer (271) umfasst, wobei die Klemme geeignet ist, von einer freien Konfiguration in eine in dem Gewinde der Öffnung befestigte Konfiguration überzugehen;
- ein Stützelement (21) auf der Klemme, das geeignet ist, am Verbinder mit Hilfe mindestens einer Schraube (24a, 24b) befestigt zu werden, so dass die Schraube eine Verbindung herstellt, um Strom an der Batterie zu entnehmen, und die Stützkraft auf die Klemme ausübt, wobei die Stützkraft die Klemme in ihrer befestigten Position hält, die bei elektrischem Kontakt mit dem Verbinder flach aufgefaltet ist, wobei die Greifer in dem Gewinde der Öffnung befestigt sind.

2. Vorrichtung nach dem vorhergehenden Anspruch, wobei das Stützelement aus Harz geformt ist.

3. Vorrichtung nach Anspruch 2, wobei der Verbinder mindestens einen Anschluss (222) umfasst, mit dem die Mutter (28) verbunden ist, wobei der Draht (30) Strom zum Messen des Potentials an dem Anschluss befördert.

4. Vorrichtung nach Anspruch 3, wobei das Stützelement ein Rahmen (21) einer Anschlussplatte (2) ist, die mit dem Verbinder verbunden ist, wobei die Schraube eine Verbindung herstellt, um Leistungsstrom an der Batterie zu entnehmen.

5. Traktionsbatterie für ein Elektro- oder Hybridfahrzeug, **dadurch gekennzeichnet, dass** sie eine Verbindungsvorrichtung nach einem der Ansprüche 3 oder 4 umfasst.

6. Elektro- oder Hybridfahrzeug, **dadurch gekennzeichnet, dass** es eine Batterie nach Anspruch 5 umfasst.

## Claims

1. Electrical connection device (2) for linking a conductor wire (30) to a connector of an electrochemical cell (22) of a battery, the connector comprising a tapped orifice of a nut (28), the device comprising:
- a lug (27) capable of being linked to the wire, the lug comprising a main body (270) capable of being folded along an axis (AA') so as to delimit two secondary bodies (270a, 270b), each of the two secondary bodies comprising a claw (271), the lug being capable of switching from a free configuration to a configuration of attachment in the tapping of the orifice;
- an element (21) bearing on the lug, capable of being fixed to the connector via at least one screw (24a, 24b), such that said screw establishes a connection for tapping a current from the battery and exerts the bearing force on the lug, said bearing force holding the lug in its configuration of attachment, unfolded flat on electrical contact with the connector, the claws attached in the tapping of the orifice.

2. Device according to the preceding claim, the bearing element being moulded in resin.

3. Device according to Claim 2, said connector comprising at least one terminal (222) with which the nut (28) is assembled, the wire (30) conveying a potential measurement current to said terminal.

4. Device according to Claim 3, the bearing element being a frame (21) of a connection plate (2) assembled with the connector, said screw establishing a connection for tapping a power current from the battery.

5. Traction battery for an electric or hybrid vehicle, **characterized in that** it comprises a connection device according to one of Claims 3 or 4.

6. Electric or hybrid vehicle, **characterized in that** it comprises a battery according to Claim 5.
